# EUROPEAN PATENT APPLICATION

(11) **EP 1 598 689 A2**
(43) Date of publication of application: **23.11.2005**
(21) Application number: 05011147.5
(22) Date of filing: 23.05.2005
(51) Int. Cl.: G02B 21/06, G02B 21/00

(54) **Fluorescence microscope**

(30) Priority: 21.05.2004 JP 2004152548
(71) Applicant: Keyence Corporation, Osaka-shi, Osaka 533-8555 (JP)
(72) Inventor: Miki, Masayuki, Higashiyodogawa-ku Osaka-shi Osaka 533 (JP)
(74) Representative: Zimmermann, Gerd Heinrich

(57) **Abstract**

The fluorescence microscope 100 comprises: a fixed-type objective lens 50 placed between a filter set and a specimen loading portion; a partition 47 that covers at least the specimen loading portion, the objective lens and the filter set to block extraneous light incident on the specimen loading portion; an imaging lens 52B arranged on the outgoing surface of the absorption filter of the filter set, the imaging lens including a zoom lens capable of continuously changing the operation distance; and an imaging portion forms a fluorescent image from a fluorescence emitted from the specimen and received by the imaging lens via the absorption filter by irradiating an excitation light onto the specimen from the excitation light source via the excitation filter of the filter set and. This configuration avoids damage to the specimen or lens surface while allowing high-contrast fluorescence observation with reduced effect of extraneous light.

## Description

The present application claims foreign priority based on Japanese Patent Application No. 2004-152548, filed May 21, 2004, the contents of which is incorporated herein by reference.

The present invention generally relates to a fluorescence microscope. In particular it relates to a fluorescence microscope having a function of taking and displaying fluorescent image of a specimen.

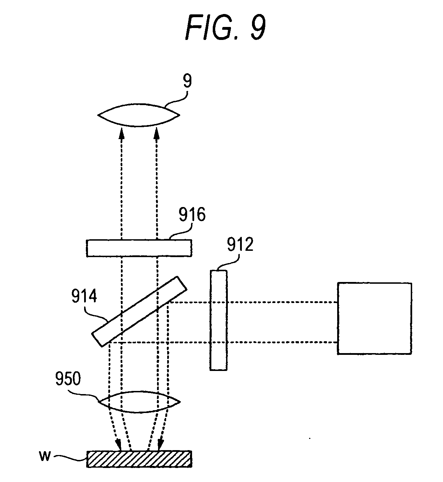

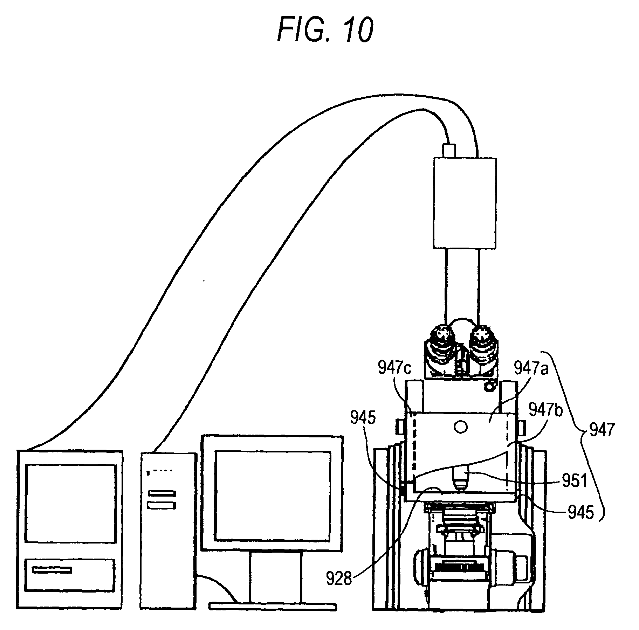

Conventionally, in order to observe the microstructure of a cell and localization of a molecule, a fluorescence microscope or a laser microscope has been used. On the fluorescence microscope, a fluorescent molecule that is specifically bonded with a particular target molecule in the specimen is attached to the target molecule in order to observe distribution and behavior of the target molecule. The fluorescent molecule is also called a fluorescent probe and includes, for example, a fluorescent molecule covalently bonded with an antibody of target protein. An example of an epi microscope is described below based on Fig. 9. Epi illumination is an illumination method where source light is illuminated through an objective lens 950 and a fluorescence from a specimen is observed through the objective lens 950. Illumination light (excitation light) and observation light (fluorescence) use the same optical path of the objective lens 950 that also serves as a condenser. In Fig. 9, in order to attain observation using epi illumination, the epi fluorescence microscope uses a dichroic mirror 914. The dichroic mirror 914 is set in a box-shaped body generally called a dichroic cube (filter set) together with an excitation filter 912 and an absorption (barrier) filter 916. Light having an unwanted wavelength is cut off from the illumination light of a light source by the excitation filter 912. Only light having a wavelength that the fluorescent molecule of a fluorescent dye can absorb is transmitted through the excitation filter 912. This attenuates the background light as an obstacle to observation. The excitation light is orthogonally reflected on the dichroic mirror 914 tilted by approximately 45 degrees with respect to an optical axis and reaches the specimen W through the objective lens 950. The fluorescence emitted from the specimen W advances in the direction opposite to the excitation light and reaches the dichroic mirror 914 through the objective lens 950. The dichroic mirror 914 reflects light having a wavelength below a specific wavelength and transmits the remaining light, so that a fluorescence passes through the dichroic mirror. After transmitting the fluorescence, the dichroic mirror 914 cuts the wavelength other than the target fluorescence by way of the absorption filter 916 to provide the possible darkest background and guides the transmitted light to an eye lens 9 (refer to JP-A-2000-227556).
In such fluorescence observation, the intensity of a fluorescence emitted by a specimen is much smaller than that of excitation light, so that it is necessary to exclude light incident from outside other than microscope illumination. Thus, a fluorescence microscope has been placed in a darkroom for observation. The work in a darkroom is cumbersome and this approach has another problem that light emitted from an image display such as a computer and a monitor connected to the fluorescence microscope degrades the picture quality of a fluorescent image. To solve the problem, there has been developed a microscope having a lightproof section comprising a stage to be placed with a specimen, the stage surrounded by plates (refer to JP-A-2002-207177). As shown in Fig. 10, this microscope comprises, as a lightproof section, plate-shaped members 947a, 947b, 947c respectively covering the space on the stage 928 from the front face and side faces of the stage 928, a coupling member 945 for retractably attaching the plate-shaped members 947a, 947b, 947c to the stage 928, and a column for supporting the main plane of the open-state plate-shaped members 947a, 947b, 947c in same plane as the main plane of the stage 928. In this way, the lightproof section 947 arranges plates around the stage 928 and blocks light incident on the stage 928 from outside. This allows use of a fluorescence microscope elsewhere than in a darkroom and prevents an observed image from being degraded even in case imaging apparatus or a computer is connected to the microscope.
On a related art microscope, it is necessary to open the darkroom each time the magnification is changed during observation of a specimen in order to change the objective lens 951. In this practice, extraneous light is illuminated onto the specimen so that the darkroom state is not maintained. That is, on the fluorescence microscope shown in Fig. 10, an objective lens is attached to the revolver to switch between a plurality of objective lenses in order to change the magnification. In a configuration where the revolver is manually rotated, an operator must insert his/her hand into a darkroom, which does not maintain the enclosed space of the darkroom. In case extraneous light is illuminated onto a specimen, the fluorescent image is disturbed and the contrast is lowered. The light causes a fast-fading specimen to start fading. To prevent this, a fluorescence microscope must be eventually placed in a darkroom. It is thus impossible to provide an easy-to-use fluorescence microscope that does nit require use of a darkroom.
Another method is to automatically change an objective lens by the use of a powered revolver. In this case, changeover of an objective lens may cause the tip of the lens to come into contact with the specimen or a preparation on which the specimen is placed thus damaging it or resulting in a scratch on the lens surface of the objective lens. The greater the numerical aperture is, or the higher the magnification is, the length of an objective lens tends to become longer. The higher the magnification is, the operation distance between a specimen and the objective lens becomes shorter. For substantially high magnification, the operation distance is 1mm or less. An attempt to change an objective lens in high-power microscopic observation is more likely to cause the tip of the objective lens to come into contact with the specimen or preparation thus damaging it or resulting in a scratch on the lens surface. Thus, an operator used to change an objective lens manually while checking that the tip of the objective lens would not come into contact with the preparation. Moreover, manual changeover requires opening of a darkroom, which causes the darkroom to disappear and the contrast of an observed image is lowered by extraneous light. Further, the distance between an objective lens and a specimen in a darkroom is hard to visually check. Thus it is difficult to check whether the objective lens is in contact with the preparation, which worsens ease-of-use. In this way, it is difficult to smoothly change the magnification while maintaining a high contrast. Thus, there has never existed a fluorescence microscope that automatically changes magnification while maintaining the darkroom state.

The present invention intends to overcome at least some of the above problems. The object is solved by the fluorescence microscope according to independent claim 1.
Further advantages, features, aspects and details of the invention are evident from the dependent claims, the description and the drawings.

This invention has been accomplished in order to solve these problems. A main object of the invention is to provide a fluorescence microscope which allows fluorescent observation without being installed in a darkroom and which is capable of changing magnification while maintaining high contrast.
In order to attain the object, a fluorescence microscope according to the invention comprises: a specimen loading portion for placing a specimen as a target of observation; a filter set including a excitation filter, a dichroic mirror and an absorption filter as optical members of an optical system; a fixed-type objective lens placed between the filter set and the specimen loading portion; a partition for covering at least the specimen loading portion, the objective lens and the filter set to block extraneous light incident on the specimen loading portion; an excitation light source for emitting an excitation light onto the specimen; an imaging lens arranged on an outgoing surface of the absorption filter of the filter set; and an imaging portion for forming a fluorescent image from a fluorescence emitted from the specimen and received by the imaging lens via the absorption filter by irradiating the excitation light onto the specimen from the excitation light source via the excitation filter of the filter set. The imaging lens of the fluorescence microscope includes a zoom lens capable of continuously changing an operation distance. With this configuration, the fixed-type objective lens is provided to abolish a switching mechanism using a revolver and a slider. This avoids a situation where the tip of the objective lens comes in contact with the specimen or preparation on the specimen loading portion while the objective lens is being replaced, thus damaging the lens or scratching the lens surface. Use of a zoom lens changes magnification without changing the objective lens. In particular, the zoom lens provides continuous change in magnification, a seamless change in magnification to facilitate a search for the field of view, unlike the discrete change in magnification by changing an objective lens. A lightproof space is provided by the partition. This allows high-contrast fluorescent image observation with reduced effect of extraneous light. In particular, automatic magnification change using a zoom lens allows high-picture-quality magnification change maintaining a high contrast without the lightproof state being impaired by extraneous light at manual change of objective lenses using a revolver.
Another fluorescence microscope according to the invention further comprises a display portion for displaying the fluorescent image taken by the imaging portion. This allows a fluorescent image to be observed without providing an eye lens for visual observation. This does without a member related to an eye lens thus simplifying the overall configuration and providing a compact and low-cost fluorescence microscope.
Another fluorescence microscope according to the invention is characterized in that the imaging portion is a CCD camera. It is possible to use the CCD camera to form and display a fluorescent image. In particular, use of a CCD camera that is more sensitive than human eyes allows display and observation of a fluorescent image that human eyes cannot recognize.
Another fluorescence microscope according to the invention is characterized in that the fluorescence microscope is an inverted fluorescence microscope. While it is difficult to observe a specimen alive on an upright microscope, it is possible to observe a specimen alive on an inverted microscope. In general, for the inverted fluorescence microscope, a fluorescence obtained via an objective lens arranged below a specimen in an inverted way needs to be polarized up to the eyes of the observer in upward direction. This introduces a polarization mirror to provide a U-shaped optical path, thus resulting in a larger-size, more complicated and higher-cost system. This disadvantage is offset by abolishing an eye lens for visual observation and members for the eye les and a mirror used to change the optical path, thereby providing a more compact inverted fluorescence microscope.
Another fluorescence microscope according to the invention is characterized in that the partition has a rectangular shape covering the optical path of the fluorescence microscope. This allows members of the optical path to be arranged in the rectangular partition in order to maintain the lightproof state without the interference with the optical path by extraneous light.
Another fluorescence microscope according to the invention is characterized in that part of the partition comprises an aperture for insertion or retrieval of the specimen. This allows the aperture to be opened to place a specimen on the specimen loading portion or replace the specimen. Once the specimen is set, the aperture is blocked so that the inside of the partition will be maintained as a lightproof space thus allowing a specimen to be observed while magnification is being changed at high contrast.
Another fluorescence microscope according to the invention is characterized by comprising a microscope illumination system for irradiating illumination light onto the specimen and the excitation light source emits excitation light onto the specimen on the specimen loading portion and.
According to the fluorescence microscope of the invention, it is possible to observe a fluorescent image at high contrast by shielding light to a specimen from outside, without placing the specimen in a darkroom. This further prevents excessive fading. Further, a related art fluorescence microscope requires manual switching between objective lenses using a revolver or a slider to change magnification and the lightproof space is impaired each time the magnification is changed thus degrading the contrast as well as change in magnification is cumbersome. Further, extreme care must be exercised in switching between objective lenses so as not to damage a specimen with the objective lens. With the fluorescence microscope of the present invention, use of a zoom lens has enabled automatic magnification change. Once a specimen is set and a lightproof space provided, magnification change is made easy while maintaining the lightproof state. This provides an excellent advantage that safe and high-picture-quality observation is possible while maintaining high contrast and without the contact of the objective lens with the specimen in changing modification, due to the fixed-type objective lens.

The invention is also directed to methods by which the described apparatus operates. These methods include steps for carrying out every function of the apparatus or manufacturing every part of the apparatus. These method steps may be performed by way of hardware components, a computer programmed by appropriate software, by any combination of the two or in any other manner.
The invention will be better understood by reference to the following description of embodiments of the invention taken in conjunction with the accompanying drawings, wherein:
Fig. 1 is a block diagram showing a fluorescence microscope according to an embodiment of the invention;
Figs. 2A-2C are perspective views of the partition of the fluorescence microscope shown in Fig. 1;
Fig. 3 shows a list of representative fluorescence pigments and the corresponding excitation filters and absorption filters.
Fig. 4 is a block diagram showing a fluorescence microscope system according to another embodiment of the invention;
Fig. 5 shows a screen layout of an exemplary display screen of the display portion;
Fig. 6 is a block diagram showing a fluorescence microscope according to another embodiment of the invention;
Fig. 7 a block diagram showing a fluorescence microscope according to still another embodiment of the invention;
Fig. 8 is a block diagram showing the control system of a fluorescence microscope according to another embodiment of the invention;
Fig. 9 is a block diagram showing a related art epi fluorescence microscope; and
Fig. 10 is a front view showing another related art fluorescence microscope.

Embodiments of the invention are described below based on drawings. Note that the embodiments described below are intended to illustrate a fluorescence microscope to embody the technical philosophy behind the invention and do not limit the invention. In particular the specification does not limit the members defined in the claims to those in the embodiments. The size or alignment of members in the drawings may be exaggerated for the purpose of illustration. In the following description, a same name or sign designates a same or homogenized member and detailed description is omitted as required. Each member of the invention may be such that the same member comprises a plurality of elements in order to let a single member serve as a plurality of elements. Conversely, a plurality of members may share the function of a single member.

### (Inverted fluorescence microscope)

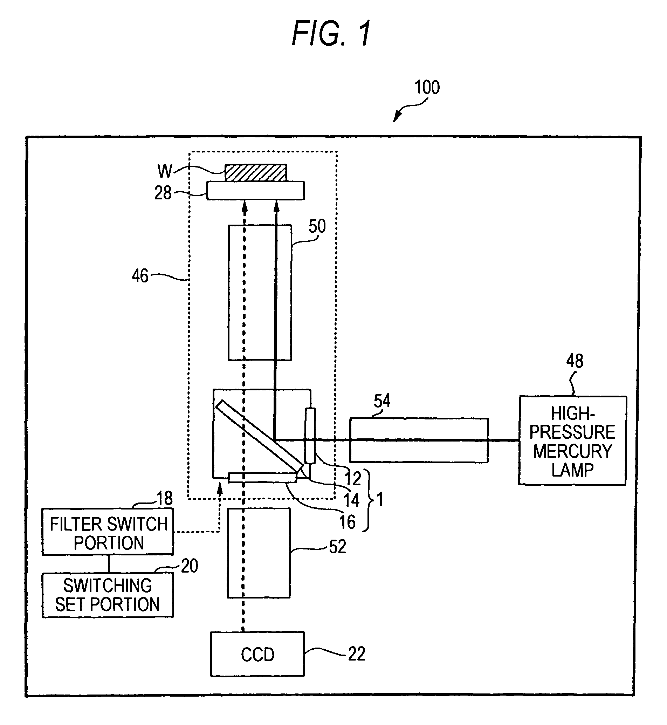

Fig. 1 shows a block diagram of a fluorescence microscope according to an embodiment of the invention. The fluorescence microscope shown in Fig. 1 is an inverted fluorescence microscope. The following example pertains to a case where a plurality of fluorescent dyes (fluorescent pigments) are introduced into a specimen W (also called a test specimen or a sample) in order to dye the specimen and cause the specimen to develop in multiple colors for multicolor fluorescent observation. A fluorescence microscope 100 shown in Fig. 1 comprises an excitation light source 48, a collector lens 54, a filter set 1, an objective lens 50, an imaging lens 52, and an imaging portion 22. These members are arranged on a certain optical path. The excitation light source 48 emits excitation light to excite a fluorescent dye. For example, a high-pressure mercury lamp or a high-pressure xenon lamp is used. These lamps irradiate light having a wide wavelength. The excitation light source 48 may be a light-emitting diode that features low power consumption, compact design and high efficiency. A member of the excitation light source may be provided in a unit, and such units may be assembled to form a fluorescence microscope. These units facilitate installation, transportation and maintenance of a fluorescence microscope system. The illumination light from the excitation light source 48 is formed into rays of light substantially parallel to each other by the collector lens 54. The rays of light are introduced as excitation light into the filter set 1. The collector lens 54 may be a fluorescence epi illumination lens in the case of epi illumination. While it is assumed that epi illumination is used to illuminate the specimen in the following example, the invention is also applicable to other illumination methods such as transmissive illumination and total reflection illumination.

The filter set 1 is a combination of a single-pass filter that selectively transmits light having a wavelength fit for observation of a specific fluorescent dye and a mirror. As shown in Fig. 1, the filter set 1 comprises an excitation filter 12, an absorption filter 16 and a dichroic mirror 14. The filter set 1 comprises a plurality of types that are changeable. each filter set 1 comprises a combination of the excitation filter 12, absorption filter 16 and dichroic mirror 14. By changing the filters or mirrors, different monochrome images may be taken. A plurality of filter sets 1 are set to a filter holder 56 and changed in a filter switch portion 18. The excitation light selected in the excitation filter 12 of the filter set 1 is reflected on the dichroic mirror 14, passes through the objective lens 50 and projected onto the specimen W.

The objective lens 50 also serves as a condenser lens. The objective lens 50 is a fixed objective lens of a single type, instead of a plurality of objective lenses one of which is selected using a revolver. While the objective lens 50 is fixed with fixing means such as a screw or a stop piece, the objective lens 50 may be detached with the fixing means released. So that it is possible to replace the objective lens 50 with another depending on the purpose of observation. For example, the objective lens 50 may be replaced with an objective lens dedicated to observation of phase difference, differential interference, a bright field, or a dark field. It is possible to mount an appropriate objective lens such as an oil-immersed lens, a water-immersed lens, a dry lens a lens for a cover slide sample, or a lens for a non-cover slide sample, depending on the purpose of observation or application. In the example shown, the objective lens 50 is fixed with a screw. The screw may be loosened to remove the objective lens 50 and replaced with another objective lens 50 for use in a variety of applications.

The specimen W is placed on the specimen loading portion 28. In general, observation of a low-light specimen such as a fluorescent specimen is made in a darkroom because it is necessary to exclude extraneous light. A fluorescence microscope 100 according to this embodiment arranges a specimen loading portion 28, an objective lens 50 and a filter set 1 in a lightproof space shielded from extraneous light, the lightproof space 46 serving as a darkroom, thereby providing an easier-to-use fluorescence microscope capable of fluorescence observation without using an additional darkroom. The specimen loading portion 28 may use an XY stage to allow traveling in X-axis and Y-axis directions. The specimen loading portion 28 may be designed to travel in vertical direction (Z-axis direction) so as to change the relative distance to an optical system 10 thus allowing focusing.

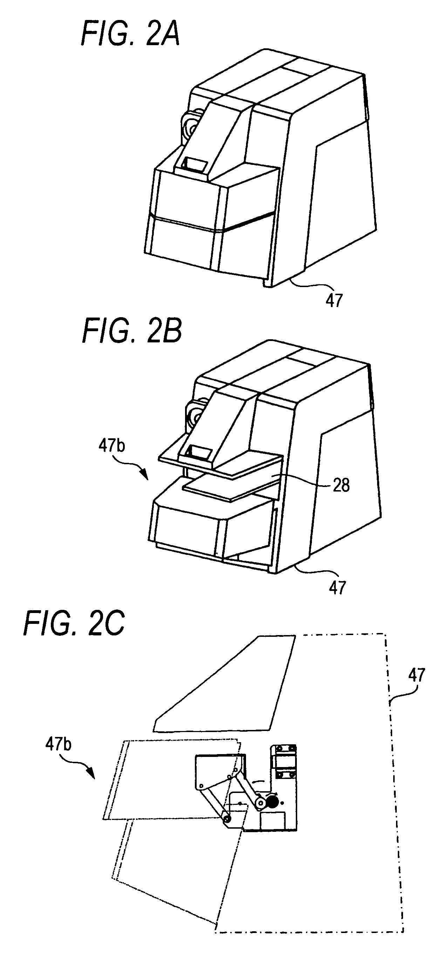

A partition 47 that constitutes a lightproof space has a shape of a box as shown in Fig. 2. As illustrated, it is possible to shield extraneous light reliably by covering the specimen loading portion 28, the objective lens 50 and the filter set 1 with the box-shaped partition 47. While the partition shown in Fig. 2A is designed to cover the entirety of the microscope, it may be enclosed with plates so that it will cover only the part of the specimen loading portion 28, the objective lens 50 and the filter set. A retractable aperture 47b is formed in part of the partition 47 for attachment and replacement of a specimen. As shown in Figs. 2b and 2c, the aperture 47b rotates part of the lid in a crank-like motion so that it will move from the forward end position to the lowermost position. This allows a preparation with a specimen set to be placed on the specimen loading portion 28 for replacement. Besides crank-like rotation of the lid, the aperture 47b may be such that the lid is slid open in vertical direction, the lid is slid open in horizontal direction (sliding door), the door is opened/closed by way of a hinge provided on the side face of the aperture 47b, or a panel to block the opening is removed. While the aperture 47b is provided in part of the front side wall of the partition 47 in the example of Fig. 2b, the while face may be opened/closed. The shape of the partition may be a hollow rectangular parallelepiped, a cylinder, a half cylinder, or a prism such as a triangular prism. The shape may be chamfered as required.
In this way, when a specimen is set on the specimen loading portion or replaced, the aperture 47b may be opened. Once the specimen is set, the aperture 47b may be blocked to maintain the internal of the partition 47 as a light-shielded lightproof space. This allows fluorescence observation at high contrast without a fluorescence microscope being installed in a darkroom. The fluorescence is not affected by the light from a computer or a monitor connected to the fluorescence microscope. Fading of a specimen is prevented. Further, work in a darkroom is made unnecessary. Thus, freedom of installation is enhanced and the operation area is bright enough for easy operation or work. Moreover, as mentioned later, use of a zoom lens ensures an excellent operation environment where change in magnification is allowed with the darkroom state maintained and adjustment to a desired magnification is made possible in the observation of a high-picture-quality fluorescent image.
Among the fluorescent dyes included in the specimen W, a fluorescent dye corresponding to the irradiated excitation light emits a fluorescence, which passes through the objective lens 50 and is incident on the filter set 1, then passes through the dichroic mirror 14. In this way, the dichroic mirror 14 reflects illumination light and transmits a fluorescence. The fluorescence is transmitted and the optical components other than a fluorescence such as illumination light are selectively absorbed by the absorption filter 16. The absorption filter 16, also called a barrier filter, is arranged closer to the face where a fluorescent image is formed than the dichroic mirror 14. The light that has exited the filter set 1 passes through an imaging lens 52 and is incident on an imaging portion 22. The imaging portion 22 is arranged in a position conjugate with the focal face of the objective lens 50. The imaging portion 22 converts a fluorescence to an electric signal. Based on the signal, an image is formed and displayed on a display portion 24. Thus, the imaging portion 22 is composed of an image taking device. A semiconductor image taking device such as a CCD camera is preferably used. The CCD camera, arranged in a two-dimensional plane, simultaneously takes a single screen without sequentially scanning the screen as in a laser microscope. The noise characteristic of a CCD camera is improved when it is cooled. Thus, a CCD camera using a Peltier device or liquid nitrogen for cooling may be used. As mentioned above, the fluorescence microscope allows automatic change of single-pass filter set 1 by way of the filter switch portion 18, and is capable of simultaneously displaying a monochrome image taken by each filter set 1 and an superposed image where such monochrome images are superposed one on another.

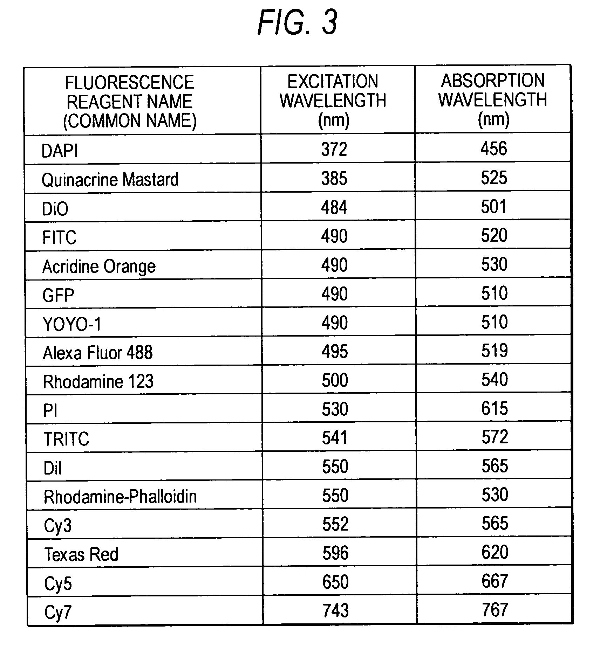

The filter set 1 includes a set of an excitation filter 12, an absorption filter 16 and a dichroic mirror 14 in a box-shaped body generally called a dichroic cube. A combination of a excitation filter 12, an absorption filter 16 and a dichroic mirror 14 of the filter set 1 is determined depending on the fluorescent dye introduced into the specimen W. A combination of single-pass bandpass filters is determined so that only the light having a desired wavelength component will be extracted and the remaining wavelength components rejected in order to allow correct observation of a color developing with a fluorescent dye. Thus, the filter set 1 used is determined depending on the fluorescent dye used. In general, the filter set 1 of different fluorescent colors is used. For example, a color combination such as RGB and CMY corresponding to fluorescence pigments may be used as required. A list of combinations of representative fluorescence pigments and the corresponding excitation filters and absorption filters is shown in Fig. 3. In Fig. 3, the reagent name (common name), the wavelength of its excitation light and the wavelength of the absorption light are shown in major peak values in the band. The plurality of filter sets 1 may be changeable by the filter switch portion 18. The plurality of filter sets 1 are set to a filter holder 56 and any one of the plurality of filter sets 1 is set on the optical path by the filter switch portion 18. The filter switch portion 18 may use a turret to change the filter set 1 in a motor-driven rotary fashion or sliding fashion. Control of the filter set 1 is set by the switching set portion 20. It is possible use the filer set 1 to change at a time a necessary set of an excitation filter 12, an absorption filter 16 and a dichroic mirror 14. Change operation may be made at a single section to facilitate high-speed operation and maintenance. Individual change means for individually changing a plurality of excitation filter, absorption filters and dichroic mirrors may be provided instead of using a filter set including a combination of an excitation filter, an absorption filter 16 and a dichroic mirror. Based on this configuration, respective change means may be controlled in an interlocked fashion to arrange a predetermined set of an excitation filter, an absorption filter and a dichroic mirror on the optical path. Further, it is possible to change an optical path by using a mirror thereby substantially change the filters for later image taking. Another method for performing multicolor fluorescence observation is the use of a dual or triple bandpass filter capable of simultaneously observing a plurality of fluorescence pigments with an image taking device such as a CCD camera attached to the fluorescence microscope, or the use of an appropriate single-pass (monochrome) filter set corresponding to each of the fluorescent pigments to be used.

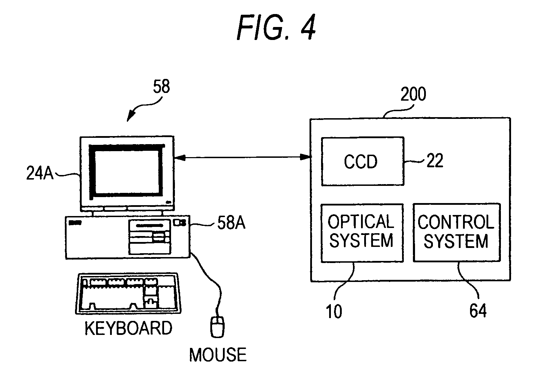

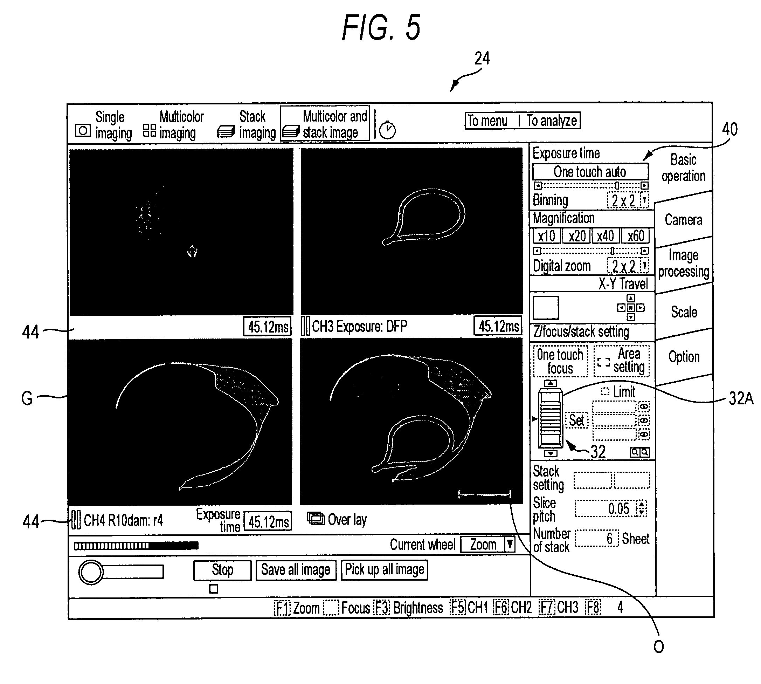

The display portion 24 is a display for displaying an image taken by the optical system 10. The display constituting the display portion 24 is a monitor that can display the image at a high resolution and may be a CRT or a liquid crystal display panel. The display portion 24 may be integrated into a fluorescence microscope or an externally connected monitor. Or, an external connection device 58 connected to a fluorescence microscope 200 may be used as a display portion as shown in Fig. 4. For example, in case a computer 58A is used as an external connection device 58, the monitor 24A of the computer 58A may provide the function of the display portion. A plurality of display portions may be used for each of the fluorescence microscope 200 and the external connection device 58.
Next, an example of the display screen of the display portion 24 is shown in Fig. 5. Fig. 5 shows an exemplary GUI representation of a fluorescence microscope image display program. As illustrated, the display portion 24 comprises a plurality of image display areas G. The display portion 24 simultaneously displays different images in the image display areas G for comparison. In particular, in this embodiment, one of the image display areas G is used as an superposed image display area O for displaying an superposed image where images observed using the filter sets are superposed one on another. This allows comparison of an image observed using a filter set and such an superposed image on the same screen. As mentioned later, in this embodiment, the images can be displayed virtually in real time, so that it is possible to readily observe the state of a specimen under various conditions. In the example of Fig. 5, total four image display areas G are provided, one of which is used as an superposed image display area O. The number of image display areas may be three or less or five or more. Preferably, the number of image display areas is the number of filters sets in the filter holder plus the number of superposed image area so that all the filter sets and an superposed image thereof can be observed on a single screen. It is of course possible to enlarge any selected screen or toggle between enlarges screens for filter sets or select an superposed image. It is not necessary to display all images on one screen. Images may be displayed in separate windows or all-image display may be selected. In this way, image display practices may be changed as required in accordance with the number of filters, purpose of observation, and user's taste. In the example of Fig. 5, three filter sets corresponding to the fluorescent dyes 1 through 3 are loaded into the filter holder 56, and monochrome images taken while toggling between these sets and an superposed image where the monochrome images are superposed one on another are displayed.

The setting screen shown in Fig. 5 comprises an image adjustment portion 40. In the example of setting screen shown in Fig. 5, switches for adjusting image adjustment parameters including the position, height, magnification, brightness and contrast for movement of field view are provided as the image adjustment portion 40 to the right of the image display area G The image adjustment parameters may be adjusted by the user or automatically set to optimum values. For example, the "One-touch Auto" button to automatically adjust the exposure time and the "One-Touch Focus" button to automatically adjust the focus are provided. Among the image adjustment parameters, the position is adjusted in terms of travel in X and Y directions, allowing a shift of the eyepoint of an image being displayed. For example, in the screen of the image display area G, dragging an arbitrary position with a mouse and shifting the position in predetermined direction moves the position or eyepoint. The specimen loading portion 28 travels in X and Y directions in accordance with the travel amount of the mouse. The up/down and right/left button as well as the crosshair button may be used to move the specimen loading portion 28. A guide may be provided for displaying the section where the currently displayed eyepoint is located in the display area.
Adjustment of height is made by determining the relative distance in Z direction, that is, between the specimen W and the optical system 10 (objective lens 50). This adjusts the focus of the image. Through adjustment of height on the height specification section, the specimen loading portion 28 is vertically moved. Adjustment of height or magnification may be made continuously and visually by using a slider, a level meter, or a scale. The example in Fig. 5 uses a slider 32A as a height specification section. In any case, the specimen loading portion 28 is moved for adjustment, the same result is obtained by moving the optical system 10.

Adjustment of magnification is made using an imaging lens 52. The imaging lens 52 is a lens arranged between the filter set 1 and the imaging portion 22 for imaging a fluorescence from the absorption filter 16 of the filter set 1. In this example, the imaging lens is a zoom scaling lens. A single imaging lens 52 may be used to continuously change the magnification for example from 10 times to 100 times. The magnification, number of apertures and operation distance of each of the objective lens and the imaging lens are set to appropriate values depending on the purpose of observation and conditions. The fluorescent image formed by the imaging lens 52 is projected onto the imaging portion 22, converted to an electric signal and displayed on an externally connected display portion 24. The image data of the fluorescent image is captures into an external connection device 58 such as a computer 58 for later processing. Processing conditions and processing results are displayed on the display of the computer 58A. The computer 58A may also use with the display portion. The observer can observe a fluorescent image on the display portion and operate the computer 58A to apply desired processing to the fluorescent image and observe the processing results on the display portion or display.

As shown in Fig. 1, an inverted fluorescence microscope according to the invention does without an eye lens for visual observation to simplify the configuration of the inverted fluorescence microscope. A related art inverted fluorescence microscope polarizes upward the optical path of a fluorescence obtained via an objective lens or a filter set provided below a specimen loading portion so that it arranges an eye lens at the height of the eyes of the user. The optical path is bent and extended so that the structure of the microscope is complicated and the resulting larger system design was a cause of high costs. Such an eye lens is abolished and the display portion for displaying an image taken by the imaging portion is externally connected in order to simplify the system and attain the compact design of the apparatus.
On a related art fluorescence microscope, the maximum field of view of the objective lens where the imaging portion can take an image is small. In case an objective lens of an appropriate magnification and high NA is selected, a field of view with large NA is secured. In this system, in order to attain magnification of 10 times to 60 times that is frequently used, a 20 X apochromat objective lens (NA=0.75) is selected. The zoom lens is set to magnification of 0.5 times (zoom out) to three times (zoom in) to attain performance approximately equivalent to NA of standard specification 10 times to 60 times.

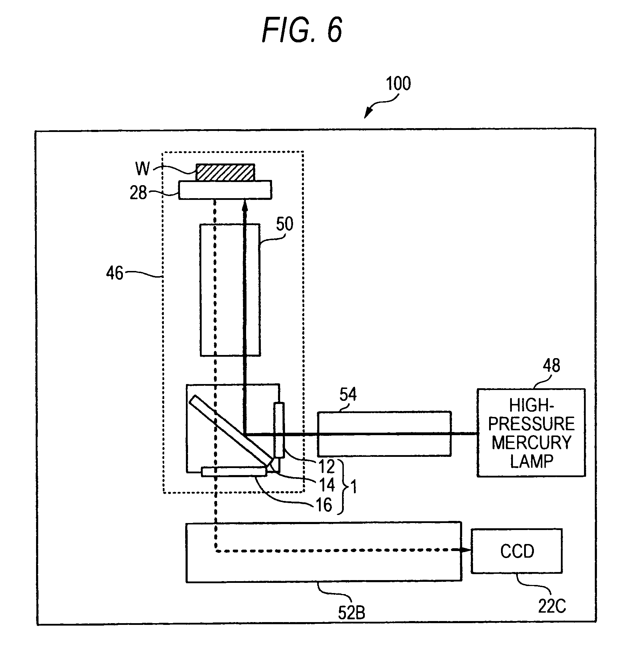

Fig. 6 shows a block diagram of an inverted fluorescence microscope according to another embodiment of the invention. The same member names as Fig. 1 uses substantially identical members so that the corresponding description is omitted. Major difference between the configuration in Fig. 6 and that in Fig. 1 is polarization of the optical axis of the imaging lens 52B. In the configuration shown in Fig. 1, a fluorescence is arrange approximately in vertical direction with respect to the excitation light irradiated approximately in horizontal direction. The configuration is extended both in horizontal and vertical directions, which results in a larger geometry of the fluorescence microscope apparatus. In contrast, for the configuration shown in Fig. 6, the imaging lens 52B that receives a fluorescence is arranged in horizontal direction and a CCD camera 22C as an imaging portion is arranged ahead of the imaging lens 52B. This limits protrusion in vertical direction, thereby reducing the overall size of the fluorescence microscope apparatus. The apparatus tends to be inherently long in horizontal direction since the path of the excitation light is arranged in horizontal direction. By arranging a path for extracting a fluorescence in horizontal direction also, the apparatus is long in horizontal direction alone with protrusion in vertical direction suppressed. Note that the horizontal direction and the vertical direction may be exchanged. When the paths of excitation light and a fluorescence are arranged in vertical direction, compact fluorescence microscope apparatus is obtained that is long in vertical direction and whose protrusion in horizontal direction is suppressed. The paths of excitation light and a fluorescence may be arranged in oblique direction. The path of excitation light and that of a fluorescence is preferably not parallel but in skew relation without crossing. In case the path are arranged in parallel, the excitation light and the fluorescence interferes with each other and produces a crosstalk, which could result in improper imaging. The paths are arranged in skew relation and in close proximity to each other, not apart from each other, in order to prevent possible interference. This contributes to downsizing of the apparatus.

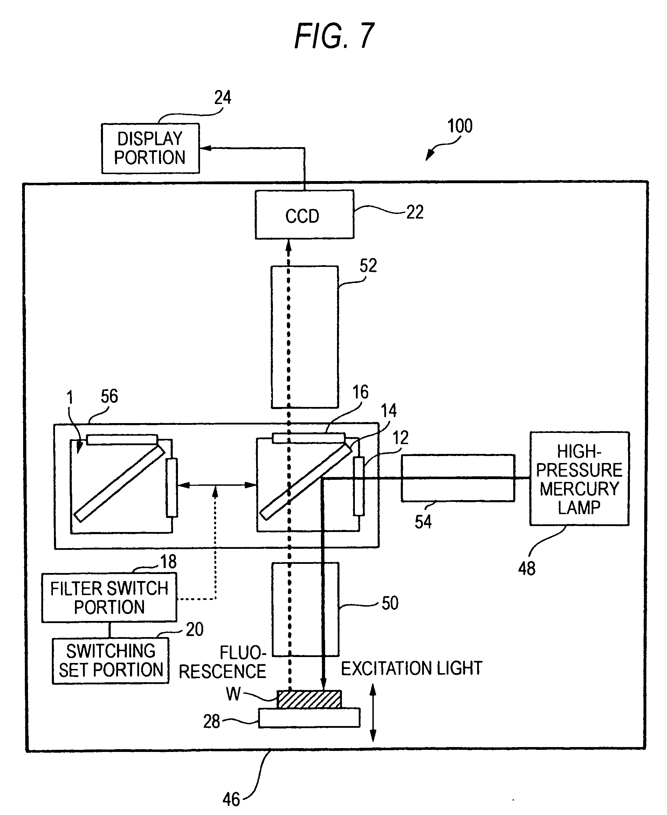

While the inverted fluorescence microscope is described in the above example, the invention is also applicable to an upright fluorescence microscope. Fig. 7 shows an upright fluorescence microscope as a fluorescence microscope according to another embodiment of the invention. As shown in Fig. 7, the upright fluorescence microscope arranges an objective lens 50 and a filter set 1 above the specimen loading portion. This fluorescence microscope includes a lightproof space where all optical paths of an optical system 10 are enclosed by a partition 47 and the partition 47 is a box-shaped case covering the entire fluorescence microscope. This completely shields extraneous light elsewhere than the microscope illumination system, thus allowing high-quality fluorescent image observation.

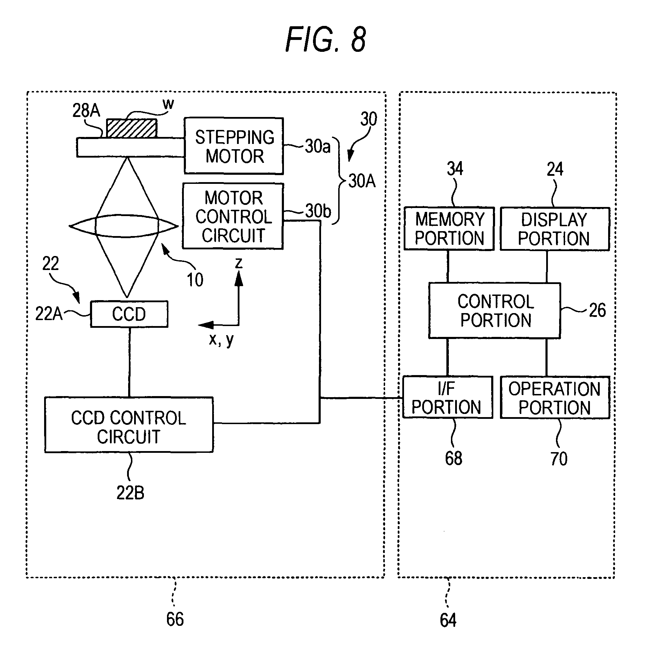

Fig. 8 shows an exemplary block diagram of a control system 64 of the fluorescence microscope. In Fig. 8, the details of the optical system 10 are not shown. As shown in Fig. 8, the fluorescence microscope comprises as an imaging system 66: a stage 28A as a form of a specimen loading portion 28 on which a specimen is placed; a stage elevator 30A for moving the stage 28A; an optical system 10 for exciting a fluorescent dye with excitation light irradiated onto a specimen W placed on the stage 28A and forming a fluorescence on an imaging portion 22; a CCD 22A as a form of the imaging portion 22 for electrically reading, per two-dimensionally arranged pixel, a fluorescence incident via the optical system 10 from the specimen W fixed to the stage 28A; and a CCD control circuit 22B for performing driving control of the CCD 22A. The stage elevator 30A is a form of a height adjustment portion 30 and includes, for example, a stepping motor 30a and a motor control portion 30b for controlling up-and-down movements of the stepping motor 30a. The stepping motor 30a moves the stage 28A in the z axis direction as an optical axis direction and in X and Y directions as a plane perpendicular to the optical axis direction.
The fluorescence microscope comprises as a control system 64 for controlling the imaging system 66: a I/F portion 68; a memory portion 34; a display portion 24; an operation portion 70; and a control portion 26. The I/F portion 68 communicates an electric signal carrying data with the imaging system 66 by way of communications means. The memory portion 34 retains image data electrically read by the imaging portion 22. The display portion 24 displays a taken image, a synthesized image, or various setting. The operation portion 70 performs operation such as input and setting based on the screen displayed on the display portion 24. The control portion 26 controls the imaging system 66 in accordance with the conditions set on the operation portion 70 to perform imaging as well as synthesizes acquired image data to generate a 3D image or performing various processing such as image processing. The imaging system 66 and the control system 64 may be included to complete operation in the fluorescence microscope alone. Or, as shown in Fig. 4, an external connection device 58 such as a computer 58A may be connected to a fluorescence microscope 200 and the fluorescence microscope 200 may operate the imaging system while the external connection device 58 may operate the control system. Members of the imaging system and those of the control system are not strictly distinguished; for example the memory portion may be included in the imaging system, or the CCD control circuit or motor control portion may be included in the control system.
The operation portion 70 is connected, either wiredly or wirelessly, to a fluorescence microscope or a computer of a fluorescence microscope system, or is fixed to the computer. Examples of a general operation portion includes a mouse, a keyboard, and various pointing devices such as a slide pad, TrackPoint, a tablet, a joystick, a console, a jog dial, a digitizer, a light pen, a ken-key pad, a touch pad, and Acupoint. Such operation portions may be used for operation of a fluorescence microscope image display program as well as operation of a fluorescence microscope and its peripherals. A display for representing an interface screen may include a touch screen or a touch panel for the user to directly touch the screen with his/her finger for data input or system operation. Voice input means or other existing input means may be used instead or in combination with the above means. In the example of Fig. 8, the operation portion 70 includes a mouse (refer to Fig. 4). Use of the mouse allows operation of a slider 32A as a height specification section 32 or focusing on an image and other operations. In this way, by displaying an operation menu together with an image on the display portion 24 and selecting an operation item and operating a function on the screen, it is possible for the user to correctly grasp the operation details and states without operation errors, thus providing a tactile and easy operation system.
A fluorescence microscope according to the invention is applicable to for example a fluorescence antibody test where the serum and cell nucleus of a patient is caused to react with each other, then a fluorescence indicator is added and an antinuclear antibody is observed on a fluorescence microscope, and whether the antibody is positive or negative is determined based on the fluorescence of the antinuclear antibody.

## Claims

1. A fluorescence microscope (100) comprising:
a specimen loading portion (28) for placing a specimen as a target of observation;
a filter set (1) including an excitation filter (12), a dichroic mirror (14) and an absorption filter (16) as optical members of an optical system;
a fixed-type objective lens (50) placed between the filter set and the specimen loading portion;
a partition for covering at least the specimen loading portion, the objective lens and the filter set to block extraneous light incident on the specimen loading portion;
an excitation light source (48) for emitting an excitation light onto the specimen;
an imaging lens (52; 52B) arranged on an outgoing surface of the absorption filter of the filter set; and
an imaging portion (22) for forming a fluorescent image from a fluorescence emitted from the specimen and received by the imaging lens via the absorption filter by irradiating the excitation light onto the specimen from the excitation light source via the excitation filter of the filter set,
wherein said imaging lens includes a zoom lens capable of continuously changing an operation distance.

2. The fluorescence microscope according to claim 1, further comprising:
a display portion for displaying the fluorescent image taken by said imaging portion.

3. The fluorescence microscope according to any of claims 1 to 2, wherein said imaging portion is a CCD camera.

4. The fluorescence microscope according to any of claims 1 to 3, wherein said fluorescence microscope is an inverted fluorescence microscope.

5. The fluorescence microscope according to any of claims 1 to 4, wherein said partition has a rectangular shape covering an optical path of the fluorescence microscope.

6. The fluorescence microscope according to any of claims 1 to 5, wherein a part of the partition comprises an aperture (47b) for insertion or retrieval of the specimen.

7. The fluorescence microscope according to claim 1, further comprising:
a microscope illumination system for irradiating illumination light onto the specimen,
wherein the excitation light source emits the excitation light onto the specimen on the specimen loading portion.
